**Europäisches Patentamt**

**European Patent Office**

**Office européen des brevets**

(19)

(11) Publication number : **0 500 268 A2**

# (12) EUROPEAN PATENT APPLICATION

(21) Application number : **92301208.2**

(22) Date of filing : **13.02.92**

(51) Int. Cl.⁵ : **G02B 27/30**

(30) Priority : **19.02.91 GB 9103403**

(43) Date of publication of application :
**26.08.92 Bulletin 92/35**

(84) Designated Contracting States :
**DE ES FR GB IT**

(71) Applicant : **BRITISH AEROSPACE PUBLIC LIMITED COMPANY**
**11 Strand**
**London WC2N 5JT (GB)**

(72) Inventor : **Miller, Lee Douglas**
**British Aerospace Dynamics Limited, PO Box 5**
**Filton, Bristol BS12 7QW (GB)**

(74) Representative : **Eastmond, John et al**
**British Aerospace plc, Corporate Intellectual Property Department, Park East, PO Box 87,**
**Farnborough Aerospace Centre**
**Farnborough, Hants GU14 6YU (GB)**

(54) **Collimation system and method.**

(57) A method and arrangement for collimating two optical apparatuses (14,18) with respective first and second optical patha. The method comprises orienting the optical patha in a predetermined orientation, interposing collimation means (24) comprising two reflecting means (20,22) such that each reflecting means intersects one of the optical patha, the predetermined orientation of the optical patha and the angle subtended by the reflecting means (20,22) being such that the optical patha are reflected to be generally parallel at a common input/output aperture. The invention thus allows collimation of optical devices without requiring a common optical path, so that collimated beams can be deflected to follow similar patterns.

Fig.3.

This invention relates to a collimation system and method.

Many optical systems require that separate items of equipment, for example an optical transmitter and an optical receiver, be accurately aligned so that the axis or bore-sights along which they transmit or receive radiation beams are collimated, i.e. parallel or coincident. One common way of achieving this is to provide common front end optics and a beam splitter or combiner arrangement. The problem with this arrangement is that the transmitter and the receiver share a common optical path and so there may be interference between the respective beams. This can be reduced by the use of mirrors but this is not always practical.

Accordingly, there is a need for a collimation system which allows optical devices to be collimated without requiring a common optical path. A need also exists for such a system which allows the collimated beams to be deflected to follow substantially similar patterns. Also, there is a need for such a system where the optics for each optical device may be matched to the specific requirements of the device.

In one aspect, this invention provides a collimation system comprising two optical apparatuses, each defining an optical path along which radiation passes to and/or from the respective apparatus, a common collimation means having two angularly spaced reflecting means each intersecting a respective one of said optical paths such that said paths are collimated or generally parallel at the radiation inlet/outlet of the system.

In another aspect, this invention provides a method of collimating two optical apparatuses each defining respective first and second optical paths, which comprises orienting said optical paths in a predetermined orientation, interposing collimation means comprising two angularly spaced reflecting means, one intersecting each optical path respectively, the predetermined orientation of the optical paths and the angle subtended by said reflecting means being selected such that the optical paths are reflected by said means to be collimated or generally parallel at a radiation inlet/outlet.

Whilst the invention has been described above it extends to any inventive combination of the features set out above or in the following description.

The invention may be performed in various ways and two embodiments thereof will now be described with reference to the following drawings, in which:-

Figure 1 is an optical ray diagram for determining the conditions for collimation of two beams;

Figure 2 is a perspective view of a collimator reflector showing the axes of movement for effecting deflection of the optical paths in azimuth and elevation respectively;

Figure 3 is a side view of a first embodiment of collimation system in accordance with the invention;

Figures 4, 5 and 6 show sequential stages in the collimation of the system of Figure 3, and

Figure 7 is a side view of a second embodiment of collimation system in accordance with the invention.

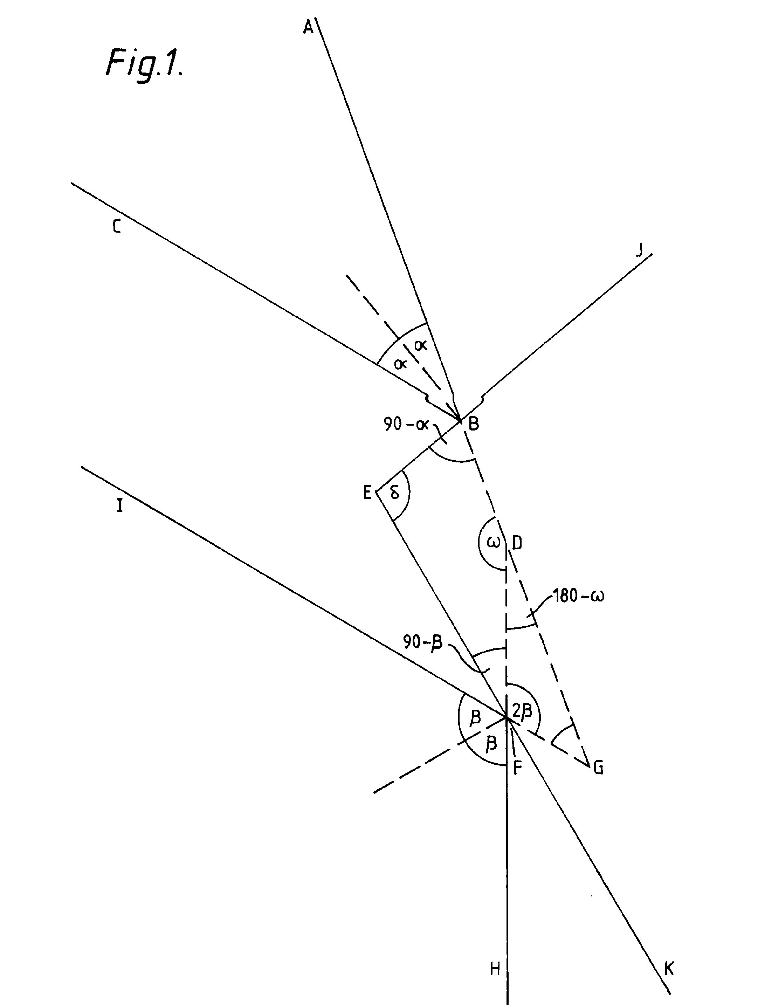

Referring to Figure 1 there is shown the general case of two coplanar rays AB and HF which are incident on two angled reflecting surfaces EJ and EK such that the reflected rays BC and FI are parallel. For BC and FI to be parallel (i.e. collimated) it can be shown that the angle (W) subtended by the rays AB and HF and the angle ($\delta$) subtended by the surfaces EJ and EK are related as follows:

$$\delta = 180 - (W/2)$$

In the embodiments described below the two items of optical equipment to be collimated are oriented facing one another with their optical path coincident. In this case, W = 180° and so $\delta$ = 90°, but $\delta$ may be greater or less than 90° depending on the value of W.

In the embodiment below, the problem of aligning two paths such that they are parallel, i.e. W = 0° is converted into one of aligning the paths such that they are co-incident, and this is often more convenient.

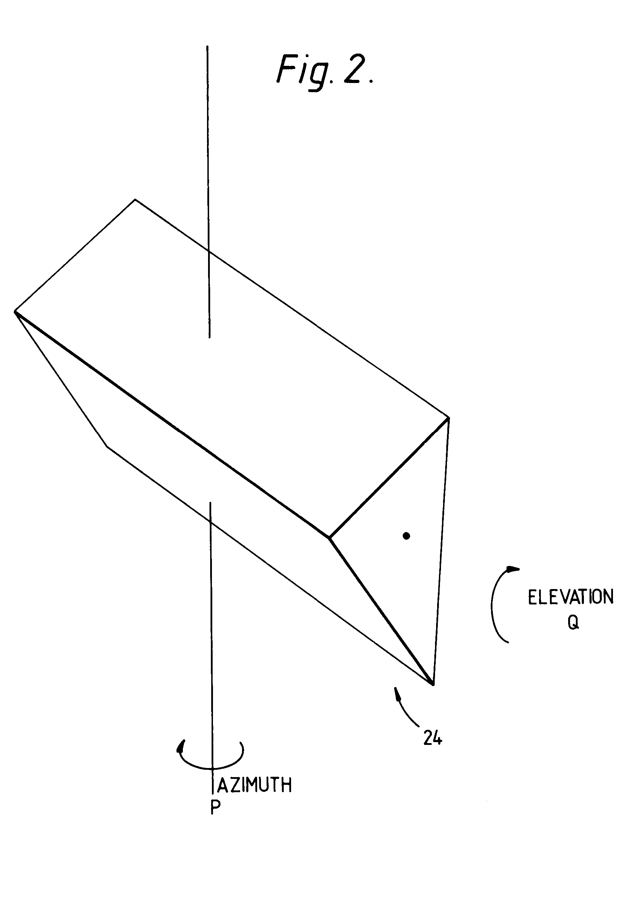

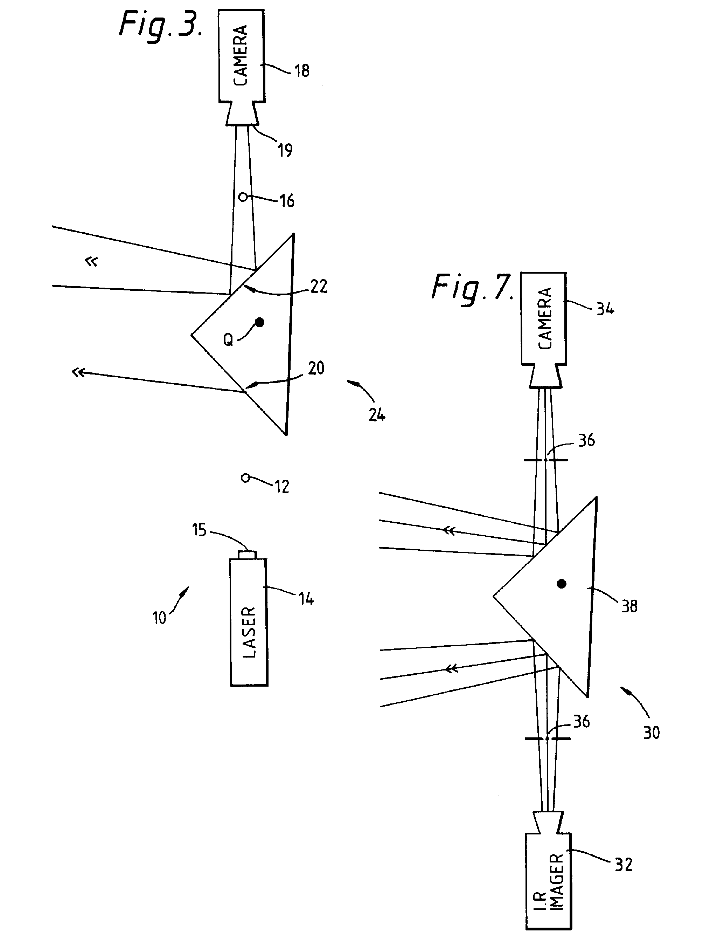

Referring now to Figure 3 there is shown a collimation system 10 for collimating the transmission path 12 of a laser 14 and the image path 16 of a camera 18. The camera and laser are adjustably mounted facing each other with their optical paths coincident. The optical paths are incident on the opposite reflecting surfaces or mirrors 20,22 of a collimator reflector 24 of prismatic shape. The collimator reflector 24, shown in perspective in Figure 2, is movable about orthogonal axes P and Q to deflect the collimated paths in azimuth and elevation respectively. From Figure 3 it will be seen that there is no common optical path and so the problems inherent with systems sharing "common" optics are avoided. Indeed the optical characteristics of the two channels can be matched to the laser 14 and camera 18 respectively. For example, the laser 14 may require a high power density reflecting surface or mirror 20 which is relatively small due to the low beam divergence of the laser. However, the camera 18 may require a relatively large mirror 22 due to the greater field of view, but this would not need to be of such high power density.

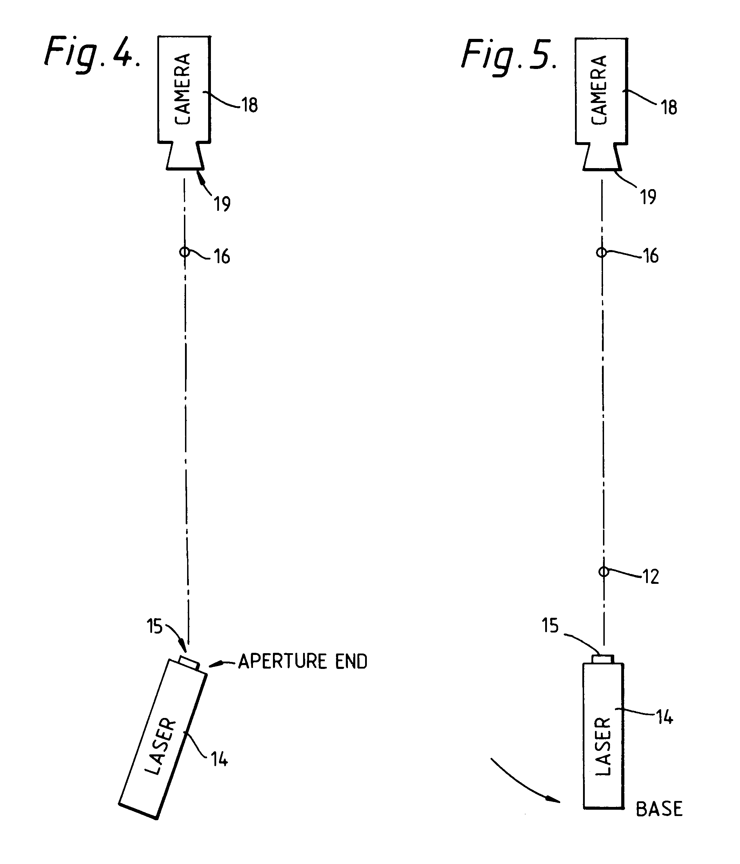

The initial setting up and collimation procedure of the system will now be described with reference to Figures 4 to 6. The collimator reflector 24 is initially withdrawn to allow the laser 14 and camera 18 to be aligned. With the laser turned off, the laser aperture 15 is aligned at the centre of the camera image. The laser aperture 15 is then fixed at this point (Figure 4) and the laser turned on. If the laser beam incident on the camera is not in the centre of the camera image, the beam angle of the laser is corrected (Figure 5). This is done either by pivoting the laser 14 about its aperture 15 or using some form of optical device to correct the angular error. Once this has been achieved the angle W between the two paths is 180°.

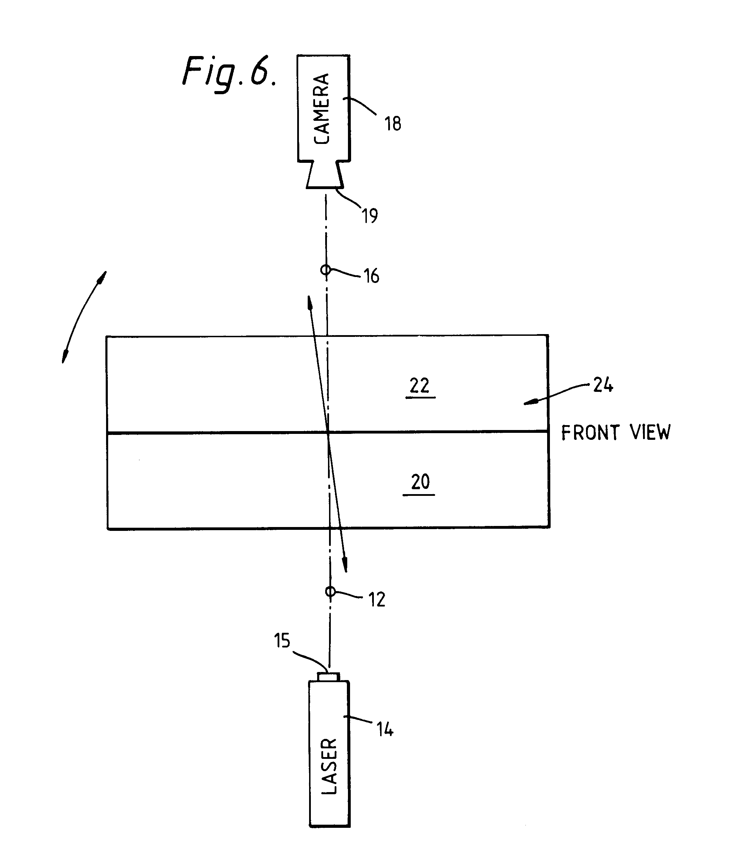

The collimator reflector 24 is then returned between the laser 14 and the camera 18. The two beams passing between the inlet/outlet of the system and the collimator reflector 24 will be correct in elevation but not necessarily in azimuth, if the elevation axis is not perpendicular to the common optical axis between the laser and the camera, as can be seen in Figure 6. This error can be corrected by rotating the collimator reflector 24 about its elevation axis so that the camera can see itself. The reflector 24 is adjusted about a third axis orthogonal to the azimuth and elevation axes until the reflected camera aperture 19 is at the centre of the camera image. The laser 14 and camera 18 are now collimated and the collimated beams can be deflected in elevation and azimuth by appropriate tilting of the reflector.

Referring to Figure 7, the second embodiment 30 is a modification of the first embodiment to cater for the case where both items of optical equipment are imaging devices, in this example an IR imager 32 and a visible spectrum camera 34. The method of collimation is similar to the previous procedure except in the alignment of the devices. This embodiment includes two heated cross-wires 36 and in the alignment procedure the IR imager 32 and camera 34 are adjusted until there is no parallax error between the cross-wires viewed from each device. Once this has been achieved W is exactly 180° and the collimator reflector 38 can be swivelled to face the camera 34 and then adjusted to allow for any azimuth error as before.

Both these embodiments allow two optical systems to be collimated relatively easily without requiring common optical path but still facilitating synchronous deflection or the separate optical paths.

## Claims

1. A collimation system (10) comprising two optical apparatuses (14,18) each defining an optical path along which radiation passes to and/or from the respective apparatus, a common collimation means (24) having two angularly spaced reflecting means (20,22) each intersecting a respective one of said optical paths such that said paths are collimated or generally parallel at the radiation inlet/outlet of the system (10).

2. A collimation system (10) according to Claim 1, wherein said collimation means (24) comprises reflecting surfaces (20,22), one associated with each optical path respectively.

3. A collimation system (10) according to Claim 1 or 2, wherein the two reflecting means (20,22) subtend an angle δ and the two optical paths subtend an angle W, δ and W being related as follows:

$$\delta = 180° - (W/2).$$

4. A collimation system (10) according to Claim 3, wherein the first and second optical paths are coincident and the angle subtended by said reflecting surfaces is 90°.

5. A collimation system (10) according to any preceding claim, wherein said collimation means (24) is movable to deflect said collimated, optical paths in at least one of two orthogonal directions (for example elevation and azimuth).

6. A collimation system (10) according to Claim 5, wherein said collimation means (24) is adjustably movable for bringing the reflected and unreflected first and second optical paths into a common plane in a setting routine.

7. A collimation system (10) according to any preceding Claim, wherein at least one of said optical apparatuses (14,18) is adjustably mounted to allow alignment thereof with a reference axis during a setting routine.

8. A collimation system (10) according to any preceding Claim, wherein one of said optical apparatuses (14,18) is a beam generating means (14) and the other is an imaging device (18).

9. A collimation system (30) according to any one of Claims 1 to 7, wherein each of said optical apparatuses is an imaging device (32,34).

10. A collimation system (10) according to Claim 9, including means for being viewed by each of said imaging devices (32,34) to allow their optical paths to be brought into alignment with a reference axis.

11. A method of collimating two optical apparatuses (14,18) with respective first and second optical paths, which comprises orienting said optical paths in a predetermined orientation, interposing collimation means (24) comprising two reflecting means (20,22) such that each reflecting means intersects one of said optical paths, the predetermined orientation of the optical paths and the angle subtended by the reflecting means being such that the optical paths are reflected to be generally parallel at a common input/output aperture.

12. A method according to Claim 11, wherein said first and second optical apparatus (14,18) are initially adjusted until one apparatus lies on the optical path of the other whereafter said one apparatus is adjusted until said optical paths are coincident.

13. A method according to Claim 12, wherein misalignment of the first and second optical paths with said collimating means (24) is corrected by moving said collimating means (24) to bring a reflecting surface nominally perpendicular to one of said optical paths and then orienting the collimating means (24) such that the portions of said optical path before and after reflection are coincident.

Fig.1.

# Fig. 2.

ELEVATION
Q

24

AZIMUTH
P

Fig.3.

CAMERA — 18

Fig.7.

CAMERA — 34

I.R IMAGER — 32

LASER — 14

*Fig.4.*

CAMERA
18

19

16

15

APERTURE END

LASER
14

*Fig.5.*

CAMERA
18

19

16

12

15

LASER
14

BASE

Fig.6.

CAMERA

18

19

16

22

24

FRONT VIEW

20

12

15

14

LASER